Europäisches Patentamt

European Patent Office

Office européen des brevets

(19)

(11) Publication number: **0 306 923**
**A2**

# EUROPEAN PATENT APPLICATION

(21) Application number: 88114619.5

(22) Date of filing: 07.09.88

(51) Int. Cl.⁴: **B29C 67/22 , B29C 49/00 ,**
**B29C 49/48 , B29C 69/02**

(30) Priority: 07.09.87 IT 2181587

(43) Date of publication of application:
**15.03.89 Bulletin 89/11**

(84) Designated Contracting States:
**BE CH DE ES FR GB GR LI NL SE**

(71) Applicant: **MONTEDIPE S.p.A.**
**31, Foro Buonaparte**
**I-20121 Milan(IT)**

(72) Inventor: **Cocca, Vincenzo**
**53, via Dante**
**I-20032 Cormano Milan(IT)**
Inventor: **Casoli, Fiorenzo**
**16, via Gramsci**
**I-21029 Vergiate Varese(IT)**
Inventor: **Frattini, Giovanni**
**14, via Zara**
**I-21100 Varese(IT)**
Inventor: **Brogi, Walter**
**100, via Gramsci**
**I-52025 Montevarchi Arezzo(IT)**

(74) Representative: **Barz, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40(DE)**

(54) **Shaped articles of thermoplastic material and process for producing them.**

(57) There are described shaped articles consisting of an outer hollow envelope of a thermoplastic material and of an inner thermally insulating mass of polyurethane, foamed in situ, bonded to the polymeric envelope as to form one unique structural body.

The process for producing them comprises the blow moulding of the outer hollow envelope and the subsequent introduction inside the interior chamber of a reactive polyurethane blend, which forms in situ the heat insulation consisting of foamed polyurethane.

FIG. 1

# SHAPED ARTICLES OF THERMOPLASTIC MATERIAL AND PROCESS FOR PRODUCING THEM

The present invention relates to a shaped article of a thermoplastic material and to the process for obtaining it.

The term "shaped article"' as used in the present specification and in the appended claims, is intended to encompass any structural, rigid, either circular or polygonal element, to be used in the field of transportation, household appliances, building industry, car industry, telecommunications, office equipment and so forth, such as doors, seat backs, covers, shutters, bumpers, bonnets, panels, spoilers, decks, chassis, casings, tanks and so forth.

It is known that the shaped articles of the above reported type are generally obtained starting from two half-shells which are mechanically assembled with each other by means of welding or of glueing, the hollow portion comprised between the two half-shells being subsequently filled with foamed polyurethane.

This methodology known from the prior art involves many operating steps, which have a negative impact on the cost of the shaped element. Furthermore, it does not allow to integrate more than one function during the moulding step, so that these latter have to be applied at a later time, with a further increase in costs. It should be furthermore added that such a methodology allows to obtain only shaped elements, which have a smooth outer surface, so that the only possibility of a personalization consists in resorting to differently-shaped grip means; what can in many cases compel the envelope to be re-designed.

The present invention allows to overcome all the above reported drawbacks, resorting to the wellknown technique of blow-moulding. According to the present invention, a shaped article of a thermoplastic material which does not show the above reported drawbacks comprises a substantially closed hollow envelope made from a thermoplastic polymer, obtained by blow-moulding, and an inner mass of a polyurethane, foamed in situ, bonded to the polymeric envelope as to form one unique structural body.

The hollow envelope can be characterized by additional parts, such as annular seats in order to fasten possible sealing gaskets, seats for fastening means or for hinge means, grip seats, means and seats for various supports and so forth, as a function of the use the shaped article is intended for.

The process for obtaining the shaped article which also is an object of the present invention, comprises blow-moulding a substantially closed hollow envelope of a thermoplastic polymer and filling this latter, while it is kept at a temperature higher than 50° C, with a polyurethanic reactive blend, forming an in situ foamed mass.

In order to manufacture the shaped article according to the present invention, any thermoplastic polymers can be used; illustrative examples comprise: polystyrene, high impact polystyrene, polystyrene modified with polar monomers such as acrylonitrile, ABS resins, polyvinyl chloride, high density polyethylene, medium density polyethylene, low density polyethylene, polypropylene, ethylene/propylene copolymers, acrylic and methacrylic resins, polymethacrylates, polyphenylenethers, and so forth.

Preferred products are polystyrenes, owing to their compatibility with the foamed polyurethane. By the term "foamed polyurethane"' as used in the present specification and in the appended claims, the well-knwon commercial products are meant, which are obtained by means of the reaction between isocyanates and polyols, in the presence of foaming agents.

According to the invention, the means for carrying out the process are characterized in that they comprise a mould, de fining the chamber inside which the hollow envelope is formed, and a complementary injection mould, provided with at least one bore through which the reactive polyurethane blend is injected by means of a known injection device.

The process of the present invention allows the residual moulding heat to be exploited during the filling step, in order to firmly bind the foamed polyurethane to the outer hollow envelope.

When the hollow envelope is characterized by additional parts, the process of the present invention comprises the use of moulds equipped with shaped, rigid, movable and/or flexible or sliding inserts, wherein the movement is obtained by means of known systems, e.g. of pneumatic or hydraulic type.

The structural and functional characteristics of the shaped articles of thermoplastic materials will be better understood from the following disclosure in greater detail, wherein reference is made to the figures of the hereto attached drawings, which show some preferred forms of practical embodiment, given in order to exemplify the present invention without limiting it, wherein:

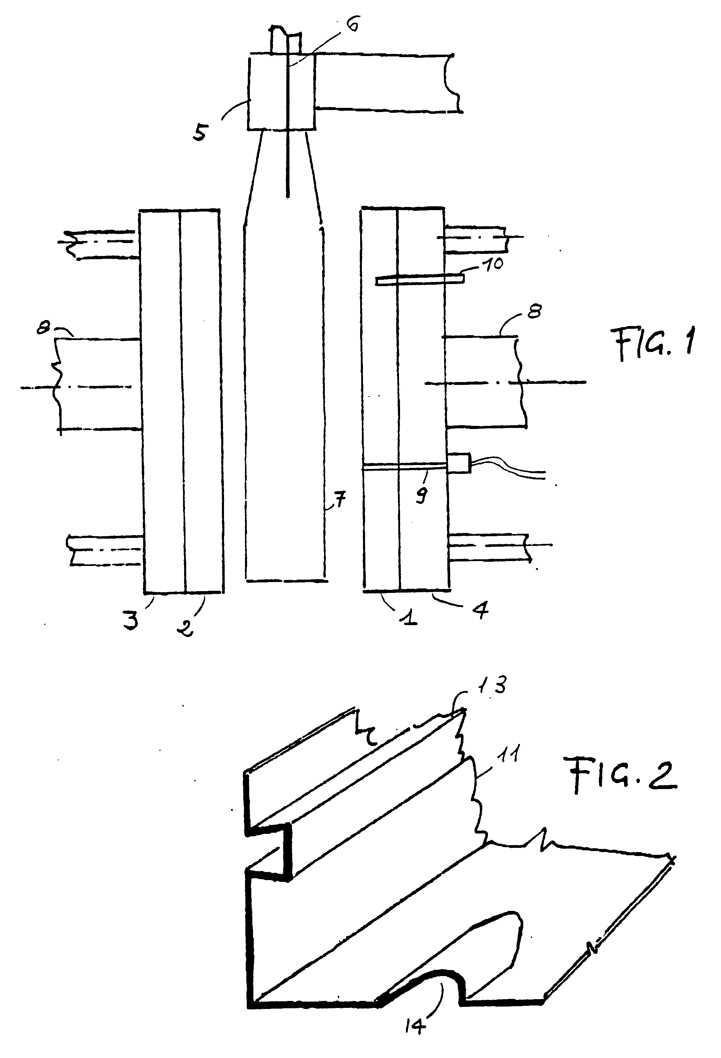

Figure 1 schematically shows an equipment for blow-moulding the envelopes of the shaped articles according to the present invention;

Figure 2 schematically shows a detail of the formed bodies according to the invention, constituted by a portion of the hollow envelope provided with a groove with an undercut, and with a recessed portion having an asymmetrical cross-section;

Figure 3 schematically shows a sectional view of a device incorporated in the mould, designed to generate in the hollow envelope a groove with an undercut;

Figure 4 schematically shows a sectional view of a further device, incorporated in the mould, designed to generate in the envelope a groove with an undercut;

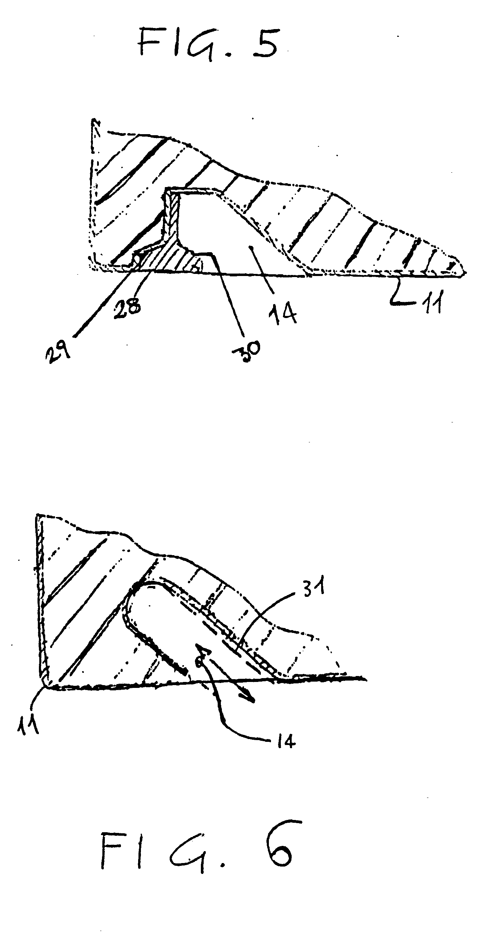

Figure 5 schematically shows a sectional view of a device, incorporated in the hollow envelope, designed to generate in the envelope a recessed portion with an asymmetrical cross-section;

Figure 6 schematically shows a sectional view of a device, incorporated and sliding in the mould, designed to generate in the envelope a recessed portion with an asymmetrical cross-section;

Figure 7 schematically shows a sectional view of two mechanisms associated with a mould, intended to realize recessed areas in the hollow envelope;

Figure 8 schematically shows a sectional view of the detail of a means provided in the mould, and bound to the application of a metal insert in the hollow envelope;

Figure 9 schematically shows the hollow body of a formed body according to the present invention, provided with grooves destined to support shelves;

Figure 10 schematically shows a perspective view of a corner detail of a door for refrigerators, realized according to the present invention;

Figure 11 schematically shows a perspective view of an impact absorber, realized according to the present invention, applied to a car bumper;

Figure 12 schematically shows a perspective view of an underrear-window shelf for supporting things, with the relevant supporting elements, realized according to the invention;

Figure 13 schematically shows a perspective view of a rear spoiler for cars, realized according to the invention;

Figure 14 schematically shows a perspective view of a seat back for a rear car seat, realized according to the invention.

Referring to the figures, the equipment for blow moulding the hollow envelopes (11) of the shaped articles according to the present invention comprises a mould consisting of two half-shells (1) and (2) respectively mounted on respective mould holders (3) and (4). The thermoplastic polymer is extruded in a tubular shape with an extended cross-section through an annular opening constituting the outlet of a channel (5) provided with an axial duct (6) which is used in order to inflate the tubular body (7) by means of the introduction of pressurized air.

After that the tubular body (7) has reached the desired length, the two half-shells (1) and (2) are applied against it, said half-shells being driven by means of hydraulic actuators (8). The application of the two half-shells determines (in a per se known way) the cutting of the tubular body (7) at the top, and the introduction inside the interior of the tubular body of one or more retractable needles (9); such needles introduce pressurized air inside the tubular body, and are connected with a purposely provided source of compressed air, not shown in the figure. The function of air injected through these needles is of causing a proper adhesion of the thermoplastic polymer of the tubular body to the outline of the hollow (12) comprised between the two half-shells (1) and (2) of the mould; an application of vacuum can cooperate to such an action, wherein such a vacuum application can take place through purposely provided ducts (10), debouching in correspondence of the face of the half-shells opposite to the polymer. As an alternative, ducts can be provided in order to vent the air which remains entrapped between the half-shells, outside the tubular body, when said half-shells are approached to each other.

As soon as the envelope (11) is shaped, the half-shells (1) and (2) are removed and conventional knockout devices, not shown in the figure, detach the envelope, which, still hot, is charged to another mould similar to the mould formed by the two half-shells (1) and (2) but fitted with at least one mobile nozzle in order to introduce inside the interior of the envelope the reactive polymeric blend.

At the end of the reaction this mould is opened and the shaped article according to the present invention is discharged.

The hollow envelope (11) can be so shaped, as to comprise grooves with an undercut (13) or (18) and/or with recessed portions having an asymmetrical cross-section (14).

In order to obtain the portions of the envelope (11) which are in such an undercut position, as to hinder the exploitation of the elastic deformation of the thermoplastic polymer when the envelope is extracted from the mould, the shaping mould comprises movable parts consisting of elastically flexible structural shapes (15) and (16) integral with the half-shell (2) and protruding from it with arcuate appendices (17), or with such shaped appendices as to create the dovetail groove (18) visible in figure 3.

Such appendices (17) are spaced apart from each other in correspondence of their mutually opposite ends (19). During the molding step, between these ends the upper end (20) of a rigid strip or wedge (21) is interposed, which is mounted between the strips (15) and (16), sliding between them in the direction of the arrows (figure 3) and driven, e.g. by a hydraulic actuator associated with the half-shell (2). With this interposition, the two appendices (17) cannot bend and result hence stiffened. When the envelope (11) is removed from the mould, when the two half-shells (1) and (2) are separated from each other, the rigid strip (21) is retracted and the ends (19) of the appendices (17) approach to each other and can hence leave the groove (18) notwithstanding the thus formed undercut.

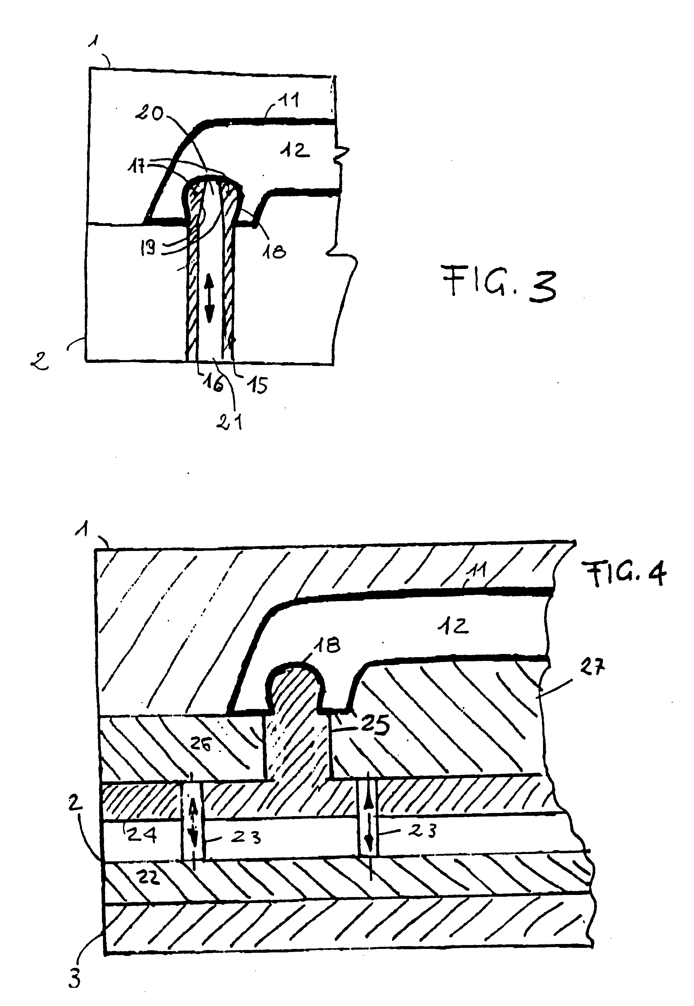

In order to obtain the portions of the envelope (11) which are in such an undercut position, as to allow the exploitation of the elastic deformability of the thermoplastic polymer during the removal of the envelope from the mould, a half-shell, e.g. the half-shell (2), comprises a plate (22) to which pins (23) are fastened, which act as a sliding guide, in the direction of the arrow (figure 4), for a plate (24) supporting an appendix (25), the upper end of which is so shaped as to generate, when the mould is closed, the dovetail groove (18).

Inasmuch as the appendix completely protrudes from the plate (24), the half-shell can also comprise sliding blocks (26) and (27) which surround the appendix (25) under its upper end, and on one side rest against the plate (24), and on their side opposite to the half-shell (1), are shaped in the proper way in order to obtain the envelope with the desired shape.

When the moulding is over, the sliding blocks are extracted and the plate (24) is taken away from the half-shell (1), by being caused to slide against the guides (23); the appendix (25) is thus extracted from the groove (18), notwithstanding the formed undercut, because the elasticity of the thermoplastic polymer.

In order to obtain a hollow envelope comprising recessed portions with asymmetrical cross-section (14), which can be used, e.g. as a grip element in the formed body according to the present invention, lengths of structural shapes (28), e.g. "T"-bars, of a material compatible with the thermoplastic polymer, can be used, which are fastened with one edge (29) of the flange of the "tee" to the envelope (11), their other edge (30) being free and capable of offering a grip for a user's hand.

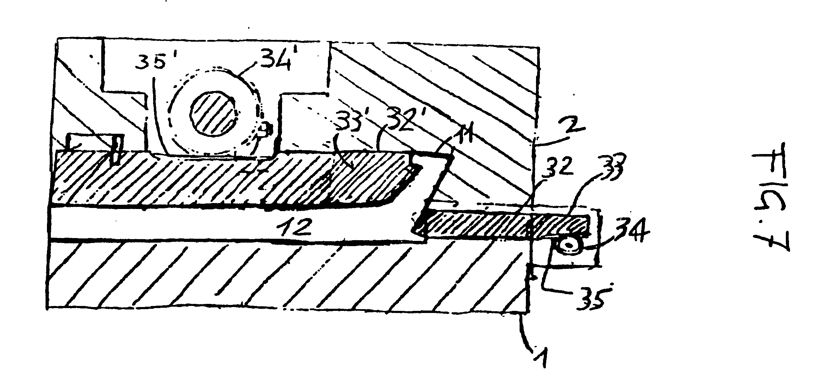

As an alternative, recessed portions with an asymmetrical cross-section (14) can be obtained by using parts (31) movable in the direction of the arrow (figure 6) and fastened to a half-shell is a more or less oblique arrangement; when the movable part is in a very oblique position, the recessed portion can be used, e.g. as a grip member.

In Figure 7 two mechanisms are shown, which use movable parts, designed as to realize in the envelope recessed portions, or hollows, with an asymmetrical cross-section.

These mechanisms comprise a seat (32), provided in the half-shell (1), inside which a shaped insert (33) can slide, which is suitable for protruding, when the mould is closed, inside the moulding hollow (12), and for retracting before the mould is opened. The relevant drive is supplied by a pinion (34), driven by anyone of the actuators known from the prior art, supported by the half-shell (1) and engaged with a rack-toothing (35) provided on the shaped insert (33).

In a similar way, a seat (32') can be provided in the half-shell (2), and inside it a shaped insert (33') can slide, being driven by a pinion (34') engaged with the rack toothing (35') provided on the same insert (33').

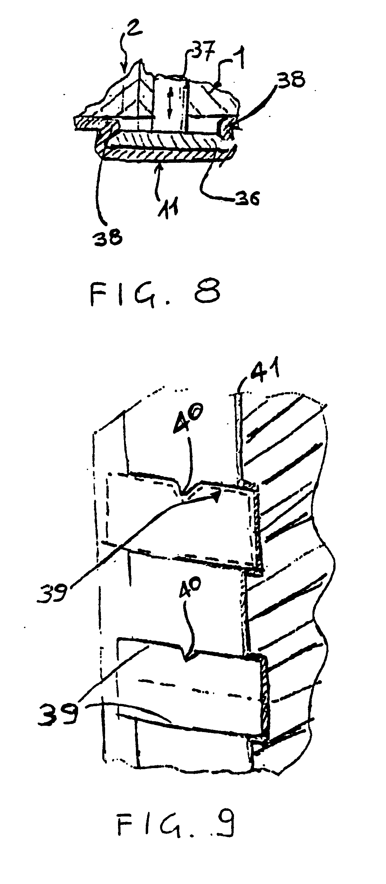

In Figure 8, a detail of the envelope (11) is shown, wherein at least one metal insert partially embedded in the thermoplastic polymer, as well as the device installed in the mould, suitable for applying such an insert, are provided.

The metal insert (36) is applied before the moulding step to a permanent magnet (37) mounted with the possibility of sliding, e.g. in the half-shell (1), protruding from this latter, and driven by an actuator, e.g. a hydraulic actuator, associated with such a half-shell. At the end of the moulding step, the permanent magnet is retracted inside the half-shell and the insert, entrapped inside the polymer which forms an undercut in (38), remains inside the envelope (11).

In Figure 9 a shaped article according to the present invention is shown, wherein the hollow envelope, of a thermoplastic material, is provided with suitable grooves for supporting shelves.

The shaped article comprises a hollow envelope (41), substantially closed and filled by a mass of in situ foamed polyurethane; on the envelope grooves (39) are provided, which are fitted with teeth (40).

The grooves perform the task of supporting shelves which are retained by the elastic engagement of the teeth (40) inside the hollows provided on the same shelves.

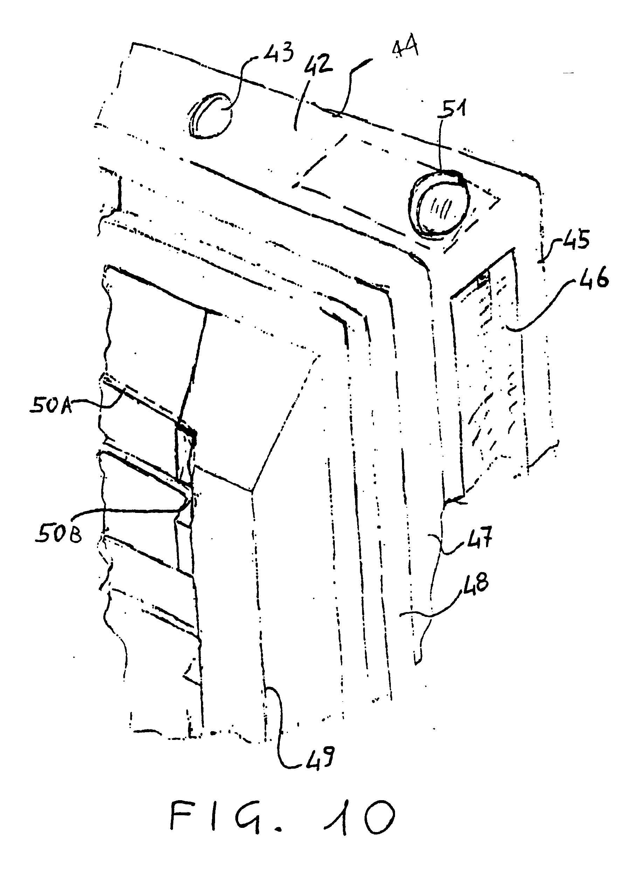

In Figure 10 a corner detail is shown of a door for refrigerators, or vertical freezers, realized according to the invention. The door is substantially rectangular or square and comprises a substantially closed hollow envelope (42) of a thermoplastic material, preferably polystyrene, filled with a mass of polyurethane foamed in situ by starting from a conventional blend 1,wherein the reactive components are constituted by isocyanates and polyols. The reactive blend is charged inside the interior of the envelope (42) through one or more holes (43) positioned e.g. on one of the sides (44).

The door furthermore comprises on one, or both, of its vertical sides (45), as a grip member, one or more recessed portions (46) with an asymmetrical cross-section, the purpose of which is to supply a grip for the user's fingers when this latter wants to open the door.

Around the periphery of the inner face (47) an annular groove is provided, for the insertion of an elastic sealing gasket, fitted with magnetic elements which, coming to rest against the contour of the refrigerator cabinet, serves to secure the necessary seal towards the external environment.

Inside the boundary defined by the groove (48), the inner face (47) is provided with two parallel shoulders (49) (which, when the door is assembled, are vertical), with only one of said shoulders being visible in figure 10.

Between said shoulders, grooves extend for supporting shelves, which in the middle portion (50 A) are perpendicular to the axis of the shoulders, and in correspondence of their end portions (50 B) extend along the same shoulders. The door can furthermore comprise metal inserts (51), partially embedded inside the material of the envelope, placed in correspondence of the upper side (44) and/or of the lower side (not shown in figure), in order to allow outfits, such as e.g. hinges, to be fastened.

In a similar way, covers or doors for household appliances, such as horizontal freezers or dishwashers, washing machines and so forth, comprise a closed envelope having a substantially rectangular or square shape, made from a thermoplastic material, preferably polystyrene, filled with a mass of polyurethane foamed in situ by starting from a conventional blend, the reactive components of which are constituted by isocyanates and polyols charged to the envelope through at least one opening.

Said covers or doors comprise on their inner face a perimetrical groove designed to house an elastic sealing gasket, and, on one edge, at least two metal inserts, practically embedded in the material which constitutes the envelope, for fastening hinges.

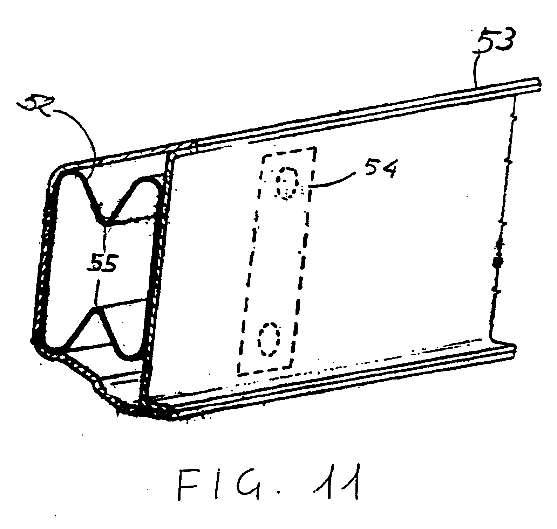

In Figure 11, a shock absorber is shown, which comprises an envelope of a thermoplastic material (52), filled with a mass of in situ foamed polyurethane, inserted in a bumper (53) fitted with a junction point (54).

The cross-section of the shock absorber (52) is characterized by two mutually opposite recessed portions (55) which are convex with respect to each other.

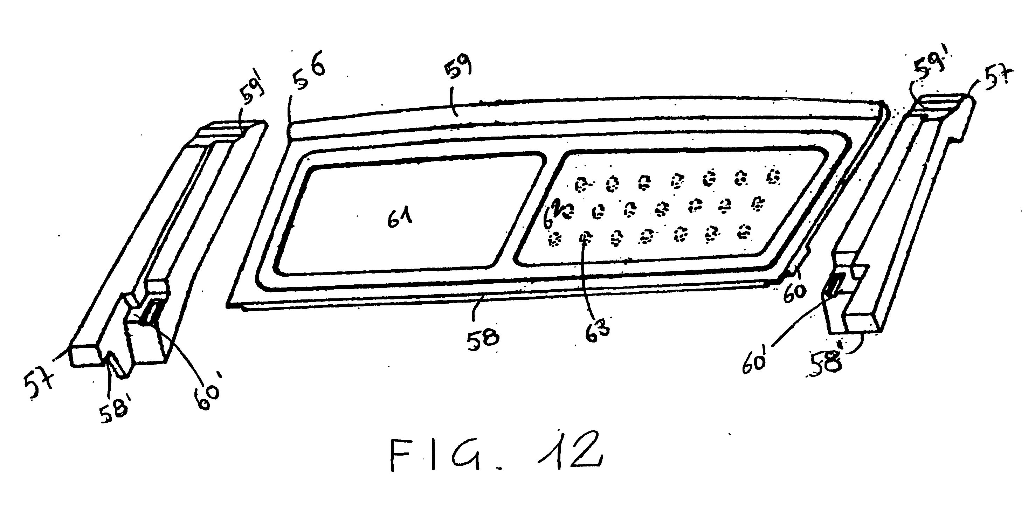

Figure 12 shows an under-rear-window shelf for cars, together with the relevant support elements, comprising hollow envelopes (56) and (57) made from a thermoplastic material, filled with in situ foamed polyurethane.

The envelopes comprise a set of grooves (58) and 58'), (59 and 59'), (60) and (60'), designed to favour the mutual joint-coupling thereof, and the insertion between the rear window and the rear seat of the car.

The shelf furthermore comprises two trays (61) and (62), wherein the first tray has a non-reinforced structure and the second tray has a structure reinforced by means of welds (63).

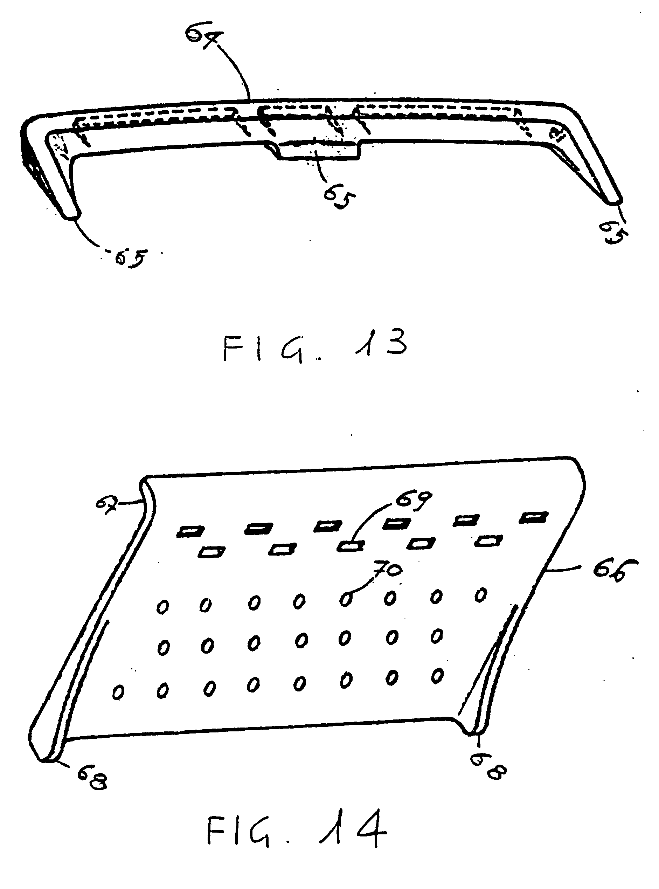

Figure 13 shows a spoiler for cars, made form a thermoplastic material, which comprises a substantially longitudinal hollow envelope (64) having a substantially triangular cross-section, filled with an in situ foamed polyurethane, and provided with contoured portions (65) acting as hooking points for fastening to the front and/or rear car bodywork.

Figure 14 shows a seat back for a car rear seat, of a blow-moulded thermoplastic material (66) filled with in situ foamed polyurethane, having a substantially square or rectangular shape, provided with contoured portions (67) and (68) designed to favour the insertion and the blocking thereof inside the interior of the car.

The seat back is provided with reinforcing welds (69) and (70), obtained by joining and welding the seat back walls at prefixed points.

By the reduction to practice of the present invention, various changes, modifications and variations may be supplied to the various parts which constitute the shaped articles of thermoplastic material illustrated, for exemplifying purposes, in the figures of the hereto attached drawings, within the pur view of the present invention, and without departing from scope of protection of the same invention.

## Claims

1. Shaped articles comprising a substantially closed hollow envelope of a thermoplastic material, obtained by blow-moulding, and an inner mass of a polyurethane foamed in situ, bonded to the polymeric envelope, so as to form one unique structural body.

2. Shaped articles according to claim I, wherein the thermoplastic polymer is selected from polystyrene, high impact polystyrene, polystyrene modified with polar monomers, such as acrylonitrile, ABS resins, polyvinyl chloride, high density polyethylene, medium density polyethylene, low density polyethylene, polypropylene, ethylene/propylene copolymers, acrylic and methacrylic resins, polymethacrylates and polyphenylenethers.

3. Shaped articles according to claim 1 or 2, wherein the thermoplastic polymers are polystyrenes.

4. Shaped articles according to anyone of the preceding claims, wherein the hollow envelope comprises additional parts, such as annular seats in order to fasten possible sealing gaskets, seats for fastening means or for hinge means, grip seats, means and seats for various supports, and so forth, as a function of the use the shaped article is intended for.

5. Shaped articles according to anyone of the preceding claims, wherein in the hollow envelope (11) grooves with an under-cut (13) or (18) and/or with recessed portions having an asymmetrical cross-section (14) are comprised.

6. Shaped articles according to claim 5, wherein the recessed portions with asymmetrical cross-section (14) comprise lengths of structural shapes (28) of a material compatible with the thermoplastic polymer.

7. Shaped articles according to anyone of the preceding claims, wherein the envelope (11) is provided with at least one metal insert (36) partially embedded in the thermoplastic polymer.

8. Shaped articles according to anyone of the preceding claims comprising a hollow envelope of a thermoplastic material, substantially closed and filled by an insulating mass of in situ foamed polyurethane, wherein on the envelope grooves (39) are provided, which are suitable for supporting shelves, the grooves being fitted with teeth (40) designed as to elastically engage with the hollows provided on the same shelves.

9. Door for refrigerators, or vertical freezers, comprising a substantially closed hollow envelope (42), having a substantially rectangular or square shape, made from a thermoplastic material, filled with a mass of polyurethane foamed in situ by starting from a conventional blend comprising isocyanates and polyols charged to the interior of the envelope (42) through one or more holes (43) provided on one of the sides (44), said door furthermore comprising: on one, or both, of its vertical sides (45), one or more recessed portions (46) with an asymmetrical cross-section; around the periphery of the inner face (47), an annular groove (48) for the insertion of an elastic sealing gasket; inside the boundary defined by the groove (48), two mutually parallel shoulders (49), between which grooves designed as to support shelves extend, which in the middle portion (50 A) are perpendicular to the axis of the shoulders, and in correspondence of their end portions (50 B) extend along the same shoulders; and metal inserts (51), placed in correspondence of the upper side (44) and/or of the lower side, in order to allow outfits to be fastened, such as e.g. hinges, partially embedded inside the material of the envelope.

10. Door for refrigerators or vertical freezers according to claim 9, wherein the thermoplastic material is polystyrene.

11. Covers or doors for household appliances such as horizontal freezers, dishwashers or washing machines, comprising a closed envelope having a substantially rectangular or square shape, of a thermoplastic material, filled with a mass of polyurethane foamed in situ by starting from a conventional blend, the reactive components of which are constituted by isocyanates and polyols charged to the envelope through at least one opening, wherein such doors or covers comprise on their inner face a perimetrical groove designed as to house an elastic sealing gasket and on one side at least two metal inserts, partially embedded inside the material of the envelope, for fastening hinges.

12. Covers or doors according to claim 11, wherein the thermoplastic material is polystyrene.

13. Shock absorber comprising an envelope of a thermoplastic material (52), filled with a mass of in situ foamed polyurethane, inserted in a bumper (53), said shock absorber being characterized by two mutually opposite recessed portions (55) convex with respect to each other.

14. Under-rear-window shelf for cars, and relevant support elements, comprising hollow envelopes (56) and (57) made from a thermoplastic material, filled with in situ foamed polyurethane, said envelopes comprising grooves (58) and (58'), (59 and 59'), (60) and (60'), designed as to favour the mutual joint-coupling thereof, and the insertion between the rear window and the rear seat of the car, the shelf furthermore comprising two trays (61) and (62), wherein the first tray has a non-reinforced structure, and the second tray has a structure reinforced by means of welds (63).

15. Spoiler for cars comprising a substantially longitudinal hollow envelope (64) of a thermoplastic material and having a substantially triangular cross-section, filled with an in situ foamed polyurethane and provided with contoured portions (65) acting as hooking points for the fastening to the front and/or rear car bodywork.

16. Seat back for a car rear seat, of a blow-moulded thermoplastic material (66) filled with in situ foamed polyurethane, having a substantially square or rectangular shape, provided with contoured portions (67) and (68) designed as to favour the insertion and the blocking thereof inside the interior of the car, said seat back being provided with reinforcing welds (69) and (70), obtained by joining and welding the seat back walls at prefixed points.

17. Process for obtaining the shaped articles according to anyone of claims from 1 to 16, comprising blow moulding a substantially closed hollow envelope of a thermoplastic polymer, and filling this latter, while keeping it at a temperature higher than 50°C, with a polyurethanic reactive blend forming an in situ foamed mass.

18. Process according to claim 17, wherein the blow-moulding mould is a mould defining the chamber inside which the hollow envelope is formed.

19. Process according to claim 18, wherein the mould is constituted by two half-shells (1) and (2) and is provided with shaped rigid (25), movable and/or flexible (15) and (16) or slidable (31), (33) and (33′) inserts, wherein the movement is obtained by means of a system of pneumatic or hydraulic nature.

FIG. 1

FIG. 2

FIG. 3

FIG. 4

FIG. 5

28  29  30  14  11

11  31  14

FIG. 6

# FIG.7

FIG. 8

FIG. 9

FIG. 10

FIG. 11

FIG. 12

FIG. 13

FIG. 14